# EUROPEAN PATENT APPLICATION

(11) **EP 2 187 140 A1**
(43) Date of publication of application: **19.05.2010**
(21) Application number: 09176007.4
(22) Date of filing: 13.11.2009
(51) Int. Cl.: F24F 5/00, F24F 12/00

(54) **Building ventilation apparatus with heat recuperation and associated method especially for swimming pools**

(30) Priority: 13.11.2008 GB 0820803
(71) Applicant: ESG Pool Ventilation Limited, St Ives, Cambridgeshire PE27 3LE (GB)
(72) Inventor: Robinson, Tony, St. Ives, Cambridgeshire PE27 3LE (GB)
(74) Representative: Gosnall, Toby

(57) **Abstract**

An apparatus for ventilating a building which comprises:
(a) an air handling unit (102) comprising one or more motorised dampers (118, 120, 124, 130, 136) configured to control the relative proportion of fresh air and recirculation air flowing into the building (100) and to control the relative proportion of exhaust air exiting the building (106);
(b) a heat exchanger (122) having one or more associated dampers to control the air flow therethrough configured to heat from 0% to a predetermined percentage of the incoming fresh air (116) with the exiting exhaust air; and
(c) one or more air moving means (112, 114) the speed of which is controlled in relation to the amount of air passing through the heat exchanger.

## Description

The invention relates to an apparatus for ventilating a building, in particular, but not exclusively a swimming pool complex.

Ventilation of swimming pool complexes is costly due to a number of factors. For example, pool halls have high energy requirements which are the result of the high ventilation rate which may be as much as 30,000 m³/h for a medium sized public pool. Swimming pool complexes are typically also maintained at a high temperature, with air and water temperatures of 29 to 30°C and continual operation 24 hours per day, 365 days per year. It is estimated that the ventilation system for an average sized swimming pool complex would cost approximately £85,000 per annum (at current UK energy prices) for gas and electricity if there is no energy conservation. This cost is around 75% sensible energy (ie energy used to provide heating, 15% latent energy (ie energy taken up by evaporating water) and 10% fan motor electricity.

Similar considerations apply to applications other than swimming pools although a swimming pool perhaps provides an extreme example. As such, it is convenient to refer to a swimming pool since the advantages of such an embodiment may be more apparent. However, the skilled person will appreciate how to apply the teachings to other buildings with the necessary modifications.

More than three quarters of the energy and cost to heat a pool can be saved by applying two principles. These two principles are the commonest ways of saving costs in swimming pool complex ventilation and comprise varying the level of fresh air with damper controls and heat recovery with heat exchangers.

Variable fresh air ventilation (VFA) is made possible by including motorised dampers in the air handling unit (AHU) which allow the ventilation rate provided for the pool hall to include varying levels of fresh air and increasing recirculation in the ventilation air supplied to the pool hall as bathing load permits. In so far as air can be recirculated, the sensible energy cost of heating fresh air is avoided.. Reducing the level of fresh air and increasing the level of recirculation air is possible for two reasons. Firstly, the pool ventilation rate is approximately 5 times greater than the amount of fresh air required for bathers. This high rate of ventilation is desirable to achieve good air distribution and heating. Secondly, the amount of fresh air required to absorb the evaporation of water from the swimming pool hall varies between 5% and 100% depending upon the conditions in the pool hall. For example, this level is approximately 5% when a pool is covered at night and evaporation is largely avoided compared with 100% during the day when the pool is used by a maximum number of bathers.

The second principle is to obtain heat recovery by transferring energy from the moisture laden air extracted to atmosphere into the incoming supply air with a plate heat exchanger. This is achieved by passing the respective flows of air between alternate plates arranged in a box like structure. As the sensible energy recovered by a typical plate heat exchanger is increased by narrowing the slots in the plate heat exchanger, the energy used by the fan motors increases, until at around 60% heat recovery in average conditions, the value of any increase in sensible energy saved is cancelled out by the increase in cost of electricity used in fan motors. That is, there becomes an optimum point after which narrowing the gaps between plates further actually reduces the overall cost efficiency, since more energy in cost terms is required to drive air through the heat exchanger than the additional saving through the plates.

Current ventilation systems make use of a combination of variable fresh air and plate heat exchange heat recovery. However, the resultant cost savings are limited. For example, VFA can save over half the energy and when a PHX is added, the saving can only be made on the energy loss after the first stage VFA saving. Furthermore, the increased fan motor cost remains unchanged and this substantially reduces the savings made by the addition of the PHX.

One alternative mechanism for partially improving the efficiency of the PHX is to reduce the flow rate of air through the PHX, however, this requires much larger apparatus and significantly increases the cost of the apparatus.

Thus, according to a first aspect of the invention there is provided an apparatus arranged to ventilate a building, the apparatus comprising:
(a) an air handling unit comprising one or more dampers configured to control the relative proportion of fresh air and recirculation air flowing into the building and to control the relative proportion of exhaust air exiting the building;
(b) a heat exchanger having one or more dampers to control the air flow therethrough and configured to heat, from 0% to a predetermined percentage of the incoming, fresh air with the exiting exhaust air; and
(c) one or more air moving means the speed of which can be controlled in relation to the amount of air passing through the heat exchanger.

Such an apparatus is believed advantageous as it enables the use of a proportionately larger heat exchanger which can more than halve the associated cost of electricity to drive fan motors typically used to drive air through the heat exchanger.

The predetermined percentage is typically approximately 33%. The skilled person will appreciate that references to "approximately 33%" can refer to a value between 25% and 40%. In one embodiment, the heat exchanger is configured to heat less than approximately 40% of the incoming fresh air, such as up to 33%. In a further embodiment, the heat exchanger is configured to heat less than approximately 50% of the incoming fresh air, such as less than 45%.

Conveniently, the heat exchanger is a plate heat exchanger but this may not be the case and it is conceivable that other embodiments use other varieties of heat exchanger. For example a shell, tube, regenerative, adiabatic wheel, plate fin, a phase change heat exchanger or the like may be provided in alternative embodiments.

The skilled person will appreciate that fresh air will generally be drawn into the building from the outside; ie external to the building. However, this need not be the case and the fresh air may be drawn from other suitable sources such as a supply of conditioned air.

By the analysis of the variation in demand for fresh air, it has been found that in a well controlled system of variable fresh air ventilation, 90% of fresh air sensible energy use is accounted for by fresh air demand at levels below approximately 33% of the ventilation rate.

In one embodiment, the apparatus additionally comprises bypass dampers configured to allow the fresh and exhaust air through the heat exchanger or to by-pass as it passes through the ventilation apparatus. For example, greater than approximately 50% of the incoming fresh air can by-pass the PHX as it passes through the ventilation apparatus, to allow more than 33% fresh air to be provided when required.

In one embodiment, the apparatus additionally comprises control means configured to independently control the total ventilation rate, the air flow through the heat exchanger and the air flow through the bypass damper. Such control means advantageously solve the problem of different pressure reductions between the two flow rates (i.e. the flow of air through the heat exchanger and the flow of air through the bypass damper).

The apparatus may be arranged to control the total ventilation rate by varying the speed of the air supply and/or extract fans.

For example, if the demand for fresh air is lower than the maximum rate that the plate heat exchanger can pass (ie less than the predetermined amount), at say 10%, the damper controlling the plate heat exchanger path will be opened to allow 10% fresh air to pass through the plate heat exchanger. At the same time the damper controlling the exhaust air into the plate heat exchanger will also be opened to the substantially the same amount; ie say 10% in this example.

With this level of air flow through the heat exchanger, the pressure drop will be less than 10% of those at full flow at the predetermined amount (ie 33% in this embodiment) since the pressure drop is proportional to the square of the flow. A control unit may automatically reduce the fan speeds so that the supply and extract rates are maintained at the specified level. In this case, this will reduce the fan motor loads and electricity running costs by more than 90% of the level associated with full flow at the predetermined amount (ie 33% in this example).

In an alternative example, if the demand for fresh air is the same or greater than the maximum rate able to be handled by the heat exchanger (i.e. the predetermined percentage - for example 33%), the pressure drop will reach the maximum heat exchanger level and no electricity savings will be made.

However, in the overall operation of the invention, the demand for fresh air above the predetermined percentage is not the normal operating condition and the demand is at much lower levels for a large proportion of the 24 hour operation period. For example, the night period when a pool cover is in place accounts for 45% of the total hours of a given day, only 5% fresh air is required. During this period, embodiments of the invention would result in a saving of over 90% of fan motor electricity costs. Day periods of low activity in the pool account for around 35% of the total hours of a given day, fresh air demand is around 22%. During this period, embodiments of the invention would result in a saving of over 60% of fan motor electricity costs. On average, it is expected that the average electricity costs associated with the PHX will be reduced by approximately 90% over a given 24 hour period.

In one embodiment, the apparatus additionally comprises processing means (which may be thought of as a control unit) configured to control the motorised dampers and the motorised bypass dampers. Such processing means may typically comprise a digital control system.

Conveniently, the dampers are motorised dampers; ie operated by a mechanical means. For example, the dampers may be operated by electrical motors, hydraulic and/or pneumatic cylinders. However, in other embodiments, it is conceivable that the dampers are manually controlled.

Typically, the air moving means are fans but any other suitable means may be used.

According to a second aspect of the invention there is provided a method of heating a building including supplying the building with a supply of fresh air which is passed through a heat exchanger, the method comprising by-passing the heat exchanger when the level of fresh air demand exceeds a predetermined amount.

Such an arrangement is possible as it has been appreciated that typically the building will require less than the predetermined amount of fresh air; ie it will operate at below its maximum capacity and may be typically within the predetermined amount. As such it is possible to dimension the heat exchanger in order to have a maximum capacity equal to the predetermined amount rather than the maximum amount of fresh air and so reduce the cost of the heat exchanger. In certain, circumstances the demand for fresh air may exceed the predetermined amount and in such circumstances the fresh air in excess of the predetermined amount may bypass the heat exchanger.

According to a third aspect of the invention there is provided a machine readable medium containing instructions which when read by a machine cause that machine to perform and the apparatus of the first aspect of the invention or to provide the method of the second aspect of the invention.

According to a fourth aspect of the invention there is provided an apparatus for ventilating a building which comprises:
(a) an air handling unit comprising one or more dampers configured to control the relative proportion of fresh air and recirculation air flowing into the building and to control the relative proportion of exhaust air exiting the building; and
(b) a heat exchanger configured to heat from 0% to a predetermined percentage of the incoming fresh air with the exiting exhaust air.

The machine readable medium may be any suitable medium for providing a machine with instructions such as a floppy disk, a CD ROM, a DVD ROM / RAM (including -R/-RW and + R/ + RW), an HD DVD, a Blu Ray^{™} disc, a memory (such as a Memory Stick^{™}, an SD card, a compact flash card, or the like), a disc drive (such as a hard disk drive), a tape, any magneto/optical storage, a network download (such as an Internet download, an FTP transfer, or the like), a wire.

It will be appreciated that references to "building" relate to references to any building requiring ventilation. For example, said building may be a swimming pool complex, golf club, leisure centre, public house, restaurant, hotel, health and fitness centre, conference suite, office block or any other similar building.

Features discussed in relation to any one of the above aspects of the invention may apply mutatis mutandis to any other aspect of the invention.

An embodiment of the invention is schematically shown in the accompanying drawing in which:

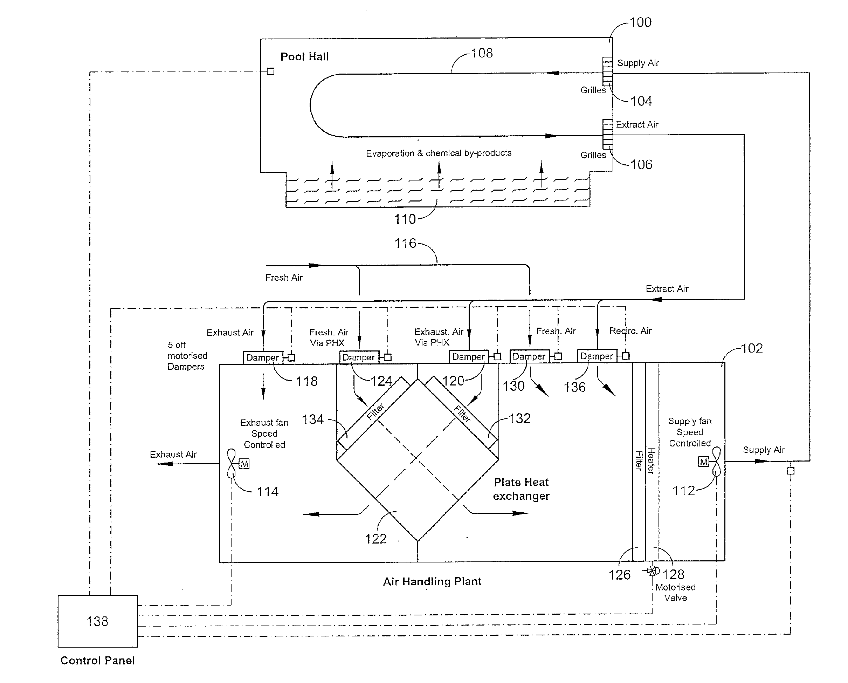

**Figure 1** shows a schematic representation of the building ventilation apparatus according to one embodiment of the invention.

Figure 1 shows in schematic form the swimming pool hall 100 and the air handling plant 102 which provides it with heating, ventilation and dehumidification to maintain comfortable and healthy conditions for bathers. Although reference is made herein to a swimming pool the skilled person will realise that it could equally be applied to other buildings.

The pool hall 100 shows an inlet grille 104 through which the ventilation air is supplied to the pool 100 and an extract grill 106 through which air is extracted from the pool 100 by the ventilation plant 102. The air circulation through the pool hall is shown schematically by the arrow 108 but this does indicate the desired flow of air over the surface of the pool 110. The flow is arranged so it can efficiently pick up from above the surface of the pool 110, moisture evaporating and also the by-products of pool chemical dosing. These by-products are insoluble and leave the water and enter the air above.

The air handling plant 102 is situated in a plant room which is typically adjacent to the pool hall 100. It includes a supply fan 112 and extract fan 114 to move the ventilation air through the extract grille 106 from the pool hall 100, through the air handling plant 102 and back to the pool hall 100 through the supply air grille 104. Air is typically moved through the so formed loop in a galvanized steel duct. These ducts serving a 25 metre 6 lane pool would be over one metre square and the volumes of ventilation air are large. In this context large may be considered to mean substantially 20,000m³/hr. However, in other embodiments, perhaps with pools of different sizes, the skilled person will appreciate that this may extend to 15,000m³/hr to 25,000m³/hr. Or indeed, it other embodiments, it may extend to 12,500m³/hr to 27,500m³/hr.

In addition to moving the air to and from the pool hall 100, the air handling plant 102 also replaces a proportion of the extracted air (ie that which is drawn through extract grille 106) with fresh dry air typically drawn from the outside from a fresh air supply 116.

The air to be replaced is exhausted to atmosphere through the exhaust fan 114 and ductwork leading to the outside of the building. However there are two routes that the exhaust air may take from the extract grille 106 to the exhaust fan 114. The first route is directly through the exhaust air damper 118 into the air handling plant 102. The second route is to pass through damper 120 into a heat exchanger 122. In this embodiment, the heat exchanger 122 is a plate heat exchanger. The exhaust air passes through one of the paths of the heat exchange 122 to be exhausted by the exhaust fan 114.

Replacement fresh air is drawn from the outside of the building, from the fresh air supply 116, into the air handling plant also through two routes. A first route draws the air from the source 116 through damper 124 via the heat exchanger 122. This route passes the air flow through the heat exchanger in the other of the paths compared to the exhaust air and finally to the air supply fan 112 after passing through a filter 126 and heater 128.

The second path for the fresh air is to be pulled from the source 116 through damper 130 thereby bypassing the heat exchanger 122 and flowing directly to the air supply fan 112.

From the diagram, it will be seen that additional filters 132, 134 are provided on inlets to the heat exchanger 122. The purpose of the filters 126, 132, 134 is to provide cleaner air for bathers and to reduce the soiling of the closely spaced fins of the heater battery 128 and the plates of the heat exchanger 122.

A fifth damper 136 is provided and allows air flowing from the extract grille 106 to be re-circulated to the air supply fan 112 without being exhausted to atmosphere via dampers 118, 120.

Typically the dampers are motorised in order that they can automatically be controlled by a control unit 138. The dampers may be actuated by any suitable control mechanism such as hydraulics, pneumatics, electric motors, etc. Indeed, it is conceivable that they may be manually controlled.

The five dampers 118, 120, 124, 130, 136 shown are provided for two main purposes. The first is to regulate the proportion of the ventilation air to the pool hall 100 that is fresh (ie drawn from source 116) or re-circulated (ie passed through damper 136). This can be varied to provide for varying numbers of bathers or varying levels of dehumidification. The second purpose is to vary the proportions of fresh and re-circulated air passing through the heat exchanger 122 to optimize the electrical and boiler heating energy used in the ventilation system.

The heat exchanger 122 is designed to recover energy from warm air leaving the ventilation system (ie passing through damper 120) to atmosphere as it passes through the slots between the plates, by heating up the incoming fresh air which has entered the heat exchanger 122 through damper 124. Over half the energy that would otherwise be lost can be recovered in this way. The heat exchanger 122 is constructed of parallel metal plates, separated by a narrow gap of around 5 mms. The warm leaving air and entering cold fresh air pass through alternate slots, so that each side of a warm air slot is in contact with a cold air slot. The slots need to be narrow to make the heat exchange efficient and this creates a substantial ventilation pressure drop and increase in fan motor electricity use. Typically, this increase in fan motor electricity increase is around 75% of the fan motor electricity cost of the system without the heat exchanger 122.

The operation of the ventilation system is controlled from a control unit 138 having a control panel, usually situated adjacent to the air handling plant 102. This includes power controls for the protection and speed control of the fan motors 112, 114 on the one hand and controls, such as sensors, thermostats, valve and damper motors that regulate the temperature, humidity and level of fresh air.

In use and where there is little requirement for fresh air within the pool hall 100 (such as at night when the pool is covered) it may be possible to ventilate the pool hall 100 with substantially 100% re-circulated air. As such, dampers 124 and 130 are closed so that no fresh air is drawn in from fresh air source 116. Dampers 118 and 120 are also closed so that no air is exhausted through the exhaust air fan 114. Thus, air is extracted from the pool hall 100 via the extract grille 106, through damper 136 into the air handling unit 102 before being fed through the filter 126, the heater 128, the supply fan 112 and back into the pool hall 100 via the supply grille 104.

In this condition, the skilled person will appreciate that the heat exchanger 122 has been removed from the path of the air circulation 108. As such, there is less resistance to the flow of the air and less fan energy is required to drive the circulating air. Therefore, the control unit 138 is arranged to reduce the speed at which the fans 112, 114 are rotated thereby reducing the amount of electrical energy that they use (assuming that they are electrically powered fans). Indeed, in this arrangement the energy use required by the fans is equivalent to an apparatus with no heat exchanger which can typically be 75% lower than a conventional system with a heat exchange unit.

As the air within the pool hall 100 becomes more humid (such as when the pool is in use, as the temperature rises, or the like) it becomes necessary to exhaust some of the humid air to the outside of the building via the exhaust air fan 114. Thus, the control unit 138 opens damper 124 thus allowing fresh air to be drawn through the heat exchanger 122. The control unit 138 also opens the damper 120 by a corresponding amount so that an equal amount of exhaust air from the pool hall as compared to the fresh air being inlet is passed through the heat exchanger 122. Thus, as fresh air is being introduced into the system to compensate for the air being exhaust through exhaust fan 114 the air being fed through air supply fan 104 remains substantially constant.

As such, the control unit 138 controls the extent to which each of the dampers 124, 120 and 136 are opened in order to maintain the desired state within the pool hall. This represents the typical operating condition.

However, as air is now being passed through the heat exchanger 122 there is more resistance to the flow of the air and as such the control unit 138 is arranged to increase the speed at which the fans 112, 114 are rotated. This increases the amount of electricity used but it is still less than prior art systems that run fans at high loads indefinitely. As such, it will be appreciated that the speed of the fans is being controlled in relation to the amount of air passing through the heat exchanger; as the air flow through the heat exchanger increases then the speed of the fans is increased.

However, because the heat exchanger 122 is of smaller designed capacity than prior art systems it can be made physically larger. As such, there is less pressure drop across it for the same amount of heat exchange. As such, the energy needed to drive air through it is reduced.

As the humidity, temperature, etc. within the pool continue to rise it may become necessary to replace more than a predetermined percentage of the air being drawn from the exhaust air grille 106. The predetermined percentage is governed by the maximum flow rate capacity of the heat exchanger 122. The skilled person will appreciate that this cannot be exceeded.

In such a condition, the control unit 138 is arranged to open the dampers 130 and 118 such that the heat exchanger 122 is by-passed. This allows a percentage of the air greater than the predetermined percentage within the air flowing through the exhaust grille 106 to be replaced.

Such a by-pass arrangement allows a smaller heat exchanger to be used than might otherwise be expected. Typically, the heat exchanger is arranged in order that it can pass substantially 33% of the air extracted through the exhaust grille 106 to be passed therethrough.

## Claims

1. An apparatus arranged to ventilate a building, the apparatus comprising:
(a) an air handling unit comprising one or more dampers configured to control the relative proportion of fresh air and recirculation air flowing into the building and to control the relative proportion of exhaust air exiting the building;
(b) a heat exchanger having one or more dampers to control the air flow therethrough and configured to heat, from 0% to a predetermined percentage of the incoming, fresh air with the exiting exhaust air; and
(c) one or more air moving means the speed of which is controlled in relation to the amount of air passing through the heat exchanger.

2. An apparatus according to claim 1 in which the predetermined percentage is typically approximately in the range of approximately 20% to 46%, possibly in the range of approximately 27% to 39% or possibly approximately 33%.

3. An apparatus according to claim 1 or 2 in which the apparatus additionally comprises bypass dampers configured to allow the fresh and exhaust air through the heat exchanger or to by-pass as it passes through the ventilation apparatus.

4. An apparatus according to any preceding claim which additionally comprises control means configured to control at least one of the following in order to reduce the energy use of the air moving means: the total ventilation rate, the air flow through the heat exchanger and the air flow through the bypass damper.

5. An apparatus according to any preceding claim which is arranged to vary the amount of air which is recycled from substantially 100% to substantially 0%.

6. A method of heating a building including supplying the building with a supply of fresh air which is passed through a heat exchanger, the method comprising by-passing the heat exchanger when the level of fresh air demand exceeds a predetermined amount, said amount being substantially the maximum capacity of the heat exchanger.

7. A machine readable medium containing instructions which when read by a machine cause that machine to perform as the apparatus of any of claims 1 to 5 or to provide the method of claim 6.
